# EUROPEAN PATENT APPLICATION

(11) **EP 2 733 513 A1**
(43) Date of publication of application: **21.05.2014**
(21) Application number: 13193465.5
(22) Date of filing: 19.11.2013
(51) Int. Cl.: G02B 6/42, G02B 6/12

(54) **Multichip package having optical interconnection**

(30) Priority: 20.11.2012 KR 20120131951
(71) Applicant: Samsung Electronics Co., Ltd, Gyeonggi-do 443-742 (KR)
(72) Inventor: Cho, Seong-ho, 449-712 Gyeonggi-do (KR)
(74) Representative: Greene, Simon Kenneth

(57) **Abstract**

A multichip package (100) that includes a first optoelectronic chip (101) including, a first substrate (110) having a first surface; a first optical device (122) disposed on the first surface; a first waveguide (126) transmitting light from the first optical device in a direction parallel to the first surface; and a first mirror (130) reflecting light from the first waveguide in an upward direction; and a second optoelectronic chip (102) stacked on the first optoelectronic chip including, a second substrate (150) having a second surface facing the first surface; a second mirror (170) disposed on the second surface, the second mirror facing the first mirror to optically interconnect to the first optoelectronic chip, the second mirror reflecting light received from the first mirror in a direction parallel to the second surface, a second waveguide transmitting light received by the second mirror, and a second optical device to which light from the second waveguide is incident.

## Description

### FIELD OF THE INVENTION

Example Embodiments relate to a multichip package using optical interconnection for information transmission between stacked optoelectronic chips.

### BACKGROUND OF THE INVENTION

A stacked multichip package includes a plurality of chips disposed vertically. Often these chips use electrical communication to electrically transmit/receive electrical signals. However, the electrical communication reduces electrical resistances between chips. Additionally, the electrical communication may be affected by external electron waves. Therefore, it may be difficult to increase the communication speed between semiconductor integrated circuits.

Recently, to improve the communication speed between chips, optical interconnects or optical communications between chips been employed. By replacing an electrical signal exchanged between devices with an optical signal, interference due to external electromagnetic waves may be reduced and high-speed communication may be possible.

### SUMMARY OF THE INVENTION

At least one example embodiment relates to a stacked multichip package delivering a signal between stacked chips through optical interconnection.

Additional aspects will be set forth in part in the description which follows and, in part, will be apparent from the description, or may be learned by practice of the presented embodiments.

According to an aspect of an example embodiment, a multichip package includes a first optoelectronic chip and a second optoelectronic chip. The first optoelectronic chip including, a first substrate; a first optical device disposed on a first surface of the first substrate; a first waveguide configured to transmit light from the first optical device in a direction parallel to the first surface; and a first mirror having a reflective surface configured to reflect light from the first waveguide in an upward direction; The second optoelectronic chip stacked on the first optoelectronic chip, the second optoelectronic chip including, a second substrate having a second surface facing the first surface; a second mirror disposed on the second surface, the second mirror having a reflective surface disposed to face the reflective surface of the first mirror such that the second optoelectronic chip is optically interconnected to the first optoelectronic chip, the reflective surface of the second mirror configured to receive light from the first mirror and reflect the received light in a direction parallel to the second surface, a second waveguide configured to receive the reflected light from the second mirror and transmit the received light, and a second optical device to which light from the second waveguide is incident.

A line connecting the first mirror and the second mirror may be substantially vertical to the first surface.

Each of the first substrate and the second substrate may be a silicon on insulator (SOI) substrate that includes a silicon layer and a buried oxide layer, the first optical device, the first waveguide, and the first mirror may be formed in the silicon layer of the first substrate, the second optical device, the second waveguide, and the second mirror may be formed in the silicon layer of the second substrate.

The first mirror may include a material having a lower refractive index than that of the first substrate, and an inclined total reflection surface with respect to the first surface, and the second mirror may include a material having a lower refractive index than that of second substrate and an inclined total reflection surface with respect to the second surface.

The first mirror and the second mirror may include of a silicon oxide.

Each of the first mirror and the second mirror may have a thickness of 0.5 *µ*m to 5 *µ*m.

The first mirror and the second mirrors may include a metallic layer.

The metallic layer may include an optical interconnection having a thickness of 100 nm to 1 *µ*m.

The first optoelectronic chip may further include a first driving circuit driving the first optical device and the second optoelectronic chip may further include a second driving circuit driving the second optical device.

The package may further include a lens on at least one of the first surface and the second surface at a position corresponding to a respective first one of the first mirror and the second mirror, the lens configured to condense incident light from the respective first one of the first mirror and the second mirror onto a second one of the first mirror and the second mirror.

The lens may have a hemispherical shape.

The lens may include a polymer or an oxide.

The package may further include a first electronic circuit electrically connected to the first driving circuit, the first electronic circuit disposed on a second surface of the first substrate facing the first surface; and a second electronic circuit electrically connected to the second driving circuit, the second electronic circuit disposed on a first surface of the second substrate.

The package may further include a sealing layer filling a space between the first and second optoelectronic chips.

The first optical device may be a light-emitting device and the second optical device may be a light-receiving device.

### BRIEF DESCRIPTION OF THE EMBODIMENTS

These and/or other aspects will become apparent and more readily appreciated from the following description of the embodiments, taken in conjunction with the accompanying drawings in which:
FIG. 1 is a cross-sectional view illustrating a stacked multichip package including an optical interconnection according to an example embodiment;
FIGS. 2A to 2D are views illustrating a method of fabricating a first mirror according to an example embodiment;
FIGS. 3A to 3B are views illustrating a method of fabricating a first mirror, according to an example embodiment;
FIG. 4 is a cross-sectional view illustrating a stacked multichip package including an optical interconnection, according to an example embodiment;
FIGS. 5A and 5B are cross-sectional views illustrating a method of forming a convex lens of FIG. 4 according to an example embodiment;
FIGS. 6A and 6D are cross-sectional views illustrating another method of forming a convex lens of FIG. 4, according to an example embodiment; and
FIG. 7 is a cross-sectional view illustrating a stacked multichip package including an optical interconnection, according to an example embodiment.

### DETAILED DESCRIPTION OF THE DRAWINGS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of" when preceding a list of elements, modify the entire list of elements and do not modify the individual elements of the list.

Detailed illustrative embodiments are disclosed herein. In the drawings, the thicknesses of layers and regions are exaggerated for clarity. Like reference numerals in the drawings denote like elements. However, specific structural and functional details disclosed herein are merely representative for purposes of describing example embodiments. Example embodiments may be embodied in many alternate forms and should not be construed as limited to only those set forth herein.

It should be understood, however, that there is no intent to limit this disclosure to the particular example embodiments disclosed. On the contrary, example embodiments are to cover all modifications, equivalents, and alternatives falling within the scope of the invention. Like numbers refer to like elements throughout the description of the figures.

It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of this disclosure. As used herein, the term "and/or," includes any and all combinations of one or more of the associated listed items.

It will be understood that when an element is referred to as being "connected," or "coupled," to another element, it can be directly connected or coupled to the other element or intervening elements may be present. In contrast, when an element is referred to as being "directly connected," or "directly coupled," to another element, there are no intervening elements present. Other words used to describe the relationship between elements should be interpreted in a like fashion (e.g., "between," versus "directly between," "adjacent," versus "directly adjacent," etc.).

The terminology used herein is for the purpose of describing particular embodiments only and is not intended to be limiting. As used herein, the singular forms "a," "an," and "the," are intended to include the plural forms as well, unless the context clearly indicates otherwise. It will be further understood that the terms "comprises," "comprising," "includes," and/or "including," when used herein, specify the presence of stated features, integers, steps, operations, elements, and/or components, but do not preclude the presence or addition of one or more other features, integers, steps, operations, elements, components, and/or groups thereof.

It should also be noted that in some alternative implementations, the functions/acts noted may occur out of the order noted in the figures. For example, two figures shown in succession may in fact be executed substantially concurrently or may sometimes be executed in the reverse order, depending upon the functionality/acts involved.

Various example embodiments of the present invention will now be described more fully with reference to the accompanying drawings in which some example embodiments of the invention are shown. In the drawings, the thicknesses of layers and regions are exaggerated for clarity.

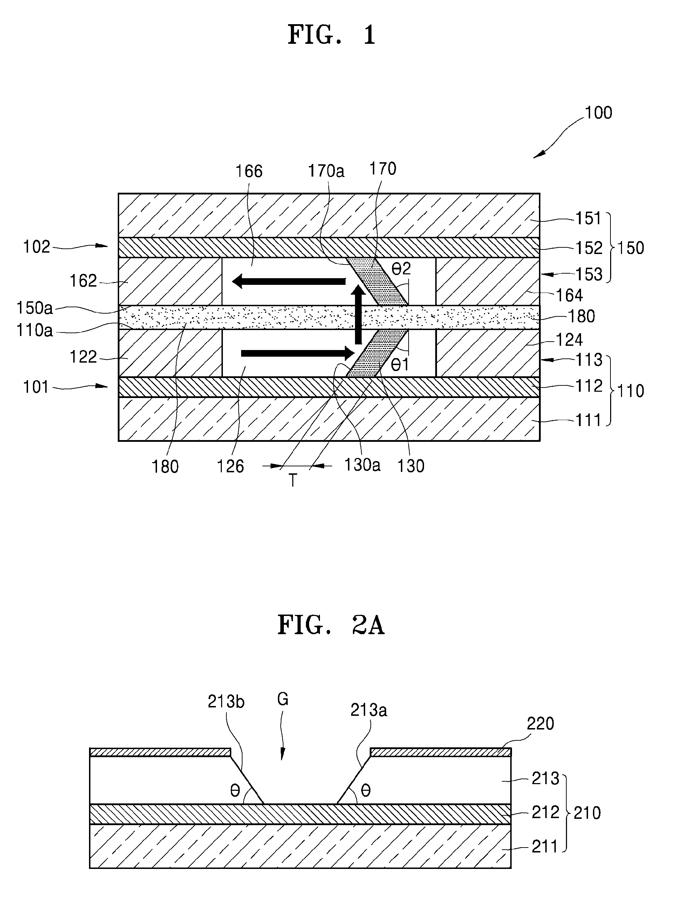

FIG. 1 is a cross-sectional view illustrating a structure of a stacked multichip package 100 according to an example embodiment.

The stacked multichip package 100 includes a first optoelectronic chip 101 and a second optoelectronic chip 102, which are stacked vertically.

The first optoelectronic chip 101 includes at least one first optical device 122 and at least one first driving circuit 124 on a first substrate 110. For convenience, one first optical device 122 and one first driving circuit 124 are shown in FIG. 1.

The second optoelectronic chip 102 includes at least one second optical device 162 and at least one second driving circuit 164 on a second substrate 150. For convenience, one second optical device 162 and one second driving circuit 164 are shown in FIG. 1.

The first substrate 110 and the second substrate 150 may be formed of silicon, GaAs, InP, or a conductive polymer. The first substrate 110 and the second substrate 150 may be silicon on insulator (SOI) substrates. The first substrate 110 may include a first silicon layer 111, a first buried oxide layer 112, and a second silicon layer 113, which are sequentially stacked. The first optical device 122 and the second optical device 124 may each include a light-emitting device or a light-receiving device.

Hereinafter, description is made with an example in which the first optoelectronic chip 101 includes a light-emitting device and the second optoelectronic chip 102 includes a light-receiving device. The first optical device 122 may be a laser diode. The first optical device 122 may be formed on the first buried oxide layer 112, or an individual device may be disposed to be connected to the first driving circuit 124 and then may be used. The light emitted from the first optical device 122 is emitted parallel to a first surface 110a.

The first driving circuit 124 may receive an external electrical signal and then may transmit a driving signal to the first optical device 122, or may transmit an electrical signal from the first optical device 122 to the outside.

The first substrate 110 includes a first mirror 130 embedded therein. The first mirror 130 may be an optical coupler. In the first mirror 130, a reflective surface 130a is formed inclined with respect to the first optical device 122, so that the first mirror 130 may receive light from the first optical device 122 and may reflect the light upwards. To guide the light, a first waveguide 126, may be formed between the first optical device 122 and the first mirror 130. Light from the first optical device 122 is incident to the first mirror 130 through the first waveguide 126, as illustrated by an arrow. Alternatively rather than the first waveguide 126, an optical fiber may be disposed between the first optical device 122 and the first mirror 130 to guide the light.

The first mirror 130 may be formed on the second silicon layer 113. The first mirror 130 may be formed of a material having a lower refractive index than the second silicon layer 113 and may totally-reflect an incident light from the first optical device 122 through the inside of the second silicon layer 113, in order to emit the total-reflected light in an upward direction illustrated by an arrow. A reflective surface 130a may be a total-reflective surface. The first mirror 130 may be formed of silicon oxide or silicon nitride.

An angle θ1 of the reflective surface 130a with respect to the first surface 110a of the substrate 110 needs to be greater than an total reflection critical angle (sin⁻¹(n2/n1)) in a relationship between a refractive index n1 of a material of the substrate 110 and a refractive index n2 of the first mirror 130. The shape of the first mirror 130 is not limited to the shown shape and any shape having the total reflective surface 130a satisfying this relationship may be used.

The thickness T of the first mirror 130 may be determined based on optical coupling efficiency and manufacturing costs. For example, the thickness T of the first mirror 130 may be in a range of about 0.5 *µ*m to about 5 *µ*m. In this case, optical coupling efficiency is greater than about 90 %. When the thickness T of the first mirror 130 is less than about 0.5 *µ*m, optical coupling efficiency may be reduced, and when the thickness T of the first mirror 130 is greater than about 5 *µ*m, manufacturing costs may be increased.

Moreover, the first mirror 130 may be an obliquely formed metallic layer. The metallic layer may be formed of Au or Al. The metallic layer may be formed with a thickness of about 10 nm to about 1 *µ*m.

The second substrate 150 may include a first silicon layer 151, a second buried oxide layer 152, and a second silicon layer 153, which are sequentially stacked. The second substrate 150 includes a second mirror 170 embedded therein. The second mirror 170 may be an optical coupler. The second mirror 170 is formed inclined with respect to the second optical device 162, so that it may receive an incident light from the first mirror 130 and then may emit the received light to the second optical device 162 in a horizontal direction. A line connecting the first mirror 130 and the second mirror 170 may be substantially vertical or perpendicular to the first surface 110a and a second surface 150a.

An optical transmission unit, for example, a second waveguide 166, may be formed between the second optical device 162 and the second mirror 170. Light incident to the second mirror 170 is transmitted to the second optical device 162, which is parallel to the second surface 150a, through the second waveguide 166, as shown in the arrow direction of FIG. 1. Alternatively, instead of the second waveguide 166, an optical fiber may be disposed between the second optical device 162 and the second mirror 170 as the optical transmission unit.

The second mirror 170 may be formed on the second silicon layer 153. The second mirror 170 may be formed of silicon oxide or silicon nitride. The second mirror 130 includes a total reflective surface 170a that is formed of a material having a lower refractive index than the second silicon layer 153 and total-reflects an incident light from the first mirror 130 toward the inside of the second silicon layer 153 in order to emit the total reflected light to the second optical device 162, which is a light-receiving device.

An angle θ2 of the total reflective surface 170a with respect to the second surface 150a of the second substrate 150 may be greater than an total reflection critical angle (sin⁻¹(n2/n1)), where n1 is a refractive index of a material of the second substrate 150 and n2 is a refractive index of the second mirror 170.

A shape of the second mirror 170 is not limited to the shown shape and any shape having the total reflective surface 170a may be used. The second mirror 170 may have a same thickness T as the first mirror 130.

Moreover, the second mirror 170 may have an obliquely formed metallic layer. The metallic layer may be formed of Au or Al. The metallic layer may be formed with a thickness of about 10 nm to about 1 *µ*m.

The first optoelectronic chip 101 may be disposed very close to the second optoelectronic chip 102. For example, the first optoelectronic chip 101 and the second optoelectronic chip 102 may be placed within an interval of several *µ*m, i.e. a Rayleigh range. A sealing layer 180 may be formed between the first optoelectronic chip 101 and the second optoelectronic chip 102. The sealing layer 180 may be formed of epoxy, resin, or plastic. The sealing layer 180 may cover the outside of the first optoelectronic chip 101 and the second optoelectronic chip 102.

In one or more example embodiments, because optical communication is used to transmit the signals between stacked chips, high-speed communication may be realized. Additionally, power consumption used for these high-speed communications may be reduced.

FIGS. 2A to 2D are views illustrating a method of fabricating a first mirror in FIG. 1 according to an example embodiment. A method of fabricating a second mirror may be identical to that of fabricating the first mirror, and thus, its detailed description is omitted.

Referring to FIG. 2A, a silicon on insulator SOI substrate 210 is prepared. The SOI substrate 210 may include a first silicon layer 211, a first buried oxide layer 212, and a second silicon layer 213, which are sequentially stacked. The second silicon layer 213 has a (100) surface. After a first pattern 220 exposing a region of the second silicon layer 213 is formed, a groove G is formed through wet etching. The groove G having inclined surfaces 213a and 213b at an angle θ is formed through wet etching. The angle θ may be about 54.7°. After etching the grove, the first pattern 220 may be removed.

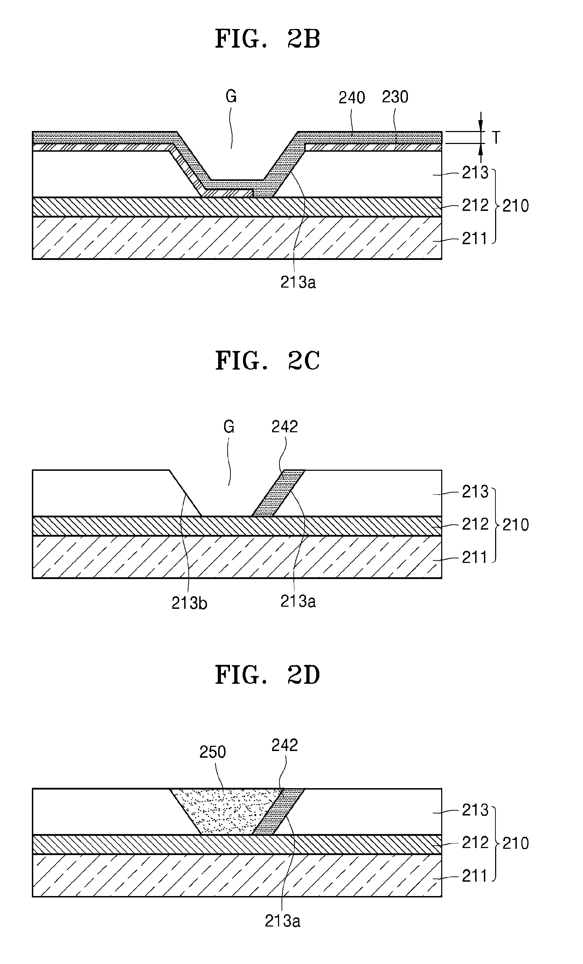

Referring to FIG. 2B, a second pattern 230 exposing the inclined surface 213a in the groove G is formed. The second pattern 230 may be formed of a photosensitizer.

A first layer 240 is deposited on the groove G. The first layer 240 is deposited with a thickness T of about 0.5 *µ*m to about 5 *µ*m by using silicon oxide or silicon nitride.

Referring to FIG. 2C, when the second pattern 230 is removed, the first layer 240 formed thereon is also removed. A portion 242 of the first layer 240 remains on the inclined surface 213a.

Referring to FIG. 2D, the groove G may be filled with a material 250 having the same or similar refractive index as silicon. For example, the groove G may be filled with amorphous silicon (a-Si) or poly-silicon (poly-Si). The material 250 on the second silicon layer 213 may be removed through chemical-mechanical planarization (CMP).

After filling the grove G, the portion of the first layer 242 may become a mirror having a total reflective surface formed of silicon oxide and silicon nitride.

Moreover, instead of silicon oxide or silicon nitride, when the first layer 240 is deposited with a thickness of about 0.1 *µ*m to about 1 *µ*m by using a metal such as Au or Al, the portion of the first layer 242 becomes a metallic reflective layer.

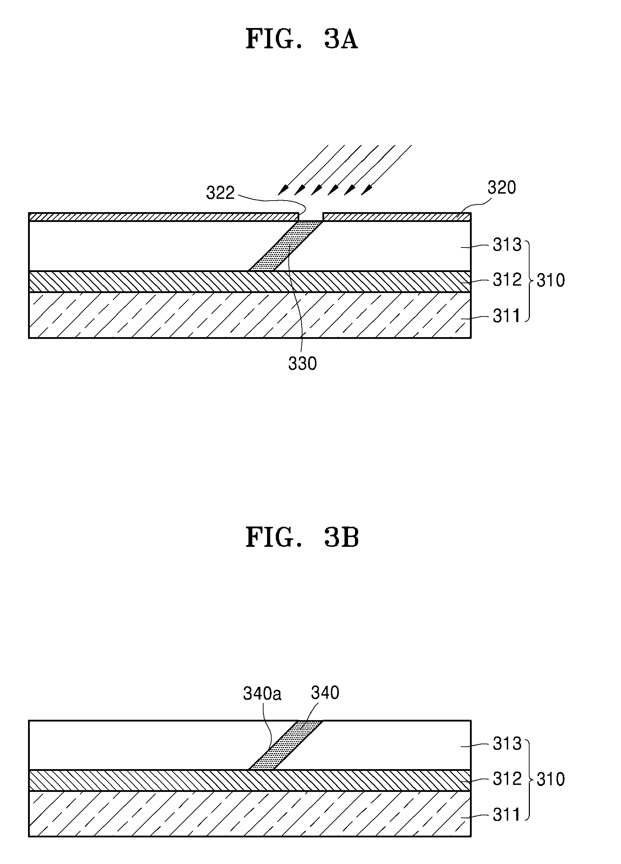

FIGS. 3A to 3B are views illustrating another method of fabricating a first mirror in FIG. 1, according to an example embodiment. A method of fabricating a second mirror may be identical to that of fabricating the first mirror, and thus, its detailed description is omitted.

Referring to FIG. 3A, a silicon on insulator SOI substrate 310 is formed. The SOI substrate 310 may include a first silicon layer 311, a buried oxide layer 312, and a second silicon layer 313, which are sequentially stacked. A mask 320 is formed on the second silicon layer 313. The mask 320 may have an opening part 322 where the mask 320 is not formed, the opening part 322 may have a width of about 0.5 *µ*m to about 5 *µ*m.

After the mask 320 is formed with the opening part 322, oxygen ions may be implanted at about 45° with respect to the opening part 322. By changing the implantation depth of the ions such that the ions implantation intensity is sequentially increased, an oxygen ion containing layer 330 having an inclined plane is formed.

Referring to FIG. 3B, after the mask 320 is removed, the SOI substrate 310 may be thermally treated at a temperature of about 1000 °C to about 1500 °C. During this thermal treatment, the oxygen ion containing layer 330 may react with silicon and change into a silicon oxide layer 340, which forms a total reflective surface 340a having a lower refractive index than the second silicon layer 313 adjacent to the total reflective layer 340a.

As an alternative, a focus ion beam may be obliquely incident at about 45° to a waveguide between an optical device and a mirror, thereby removing a portion of the waveguide. If the removed portion is filled with a material having a lower refractive index than silicon or an air layer, an inclined total reflective surface may be formed.

Since a multichip package including optical interconnection according to an example embodiment transmits a signal using optical interconnection, high-speed transmission is possible in comparison to signal transmission using a typical electrical wire.

Additionally, in one or more example embodiments, since the chips are vertically disposed and vertically disposed mirrors are used rather than an optical fiber, optical coupling efficiency between optical waveguides may be improved.

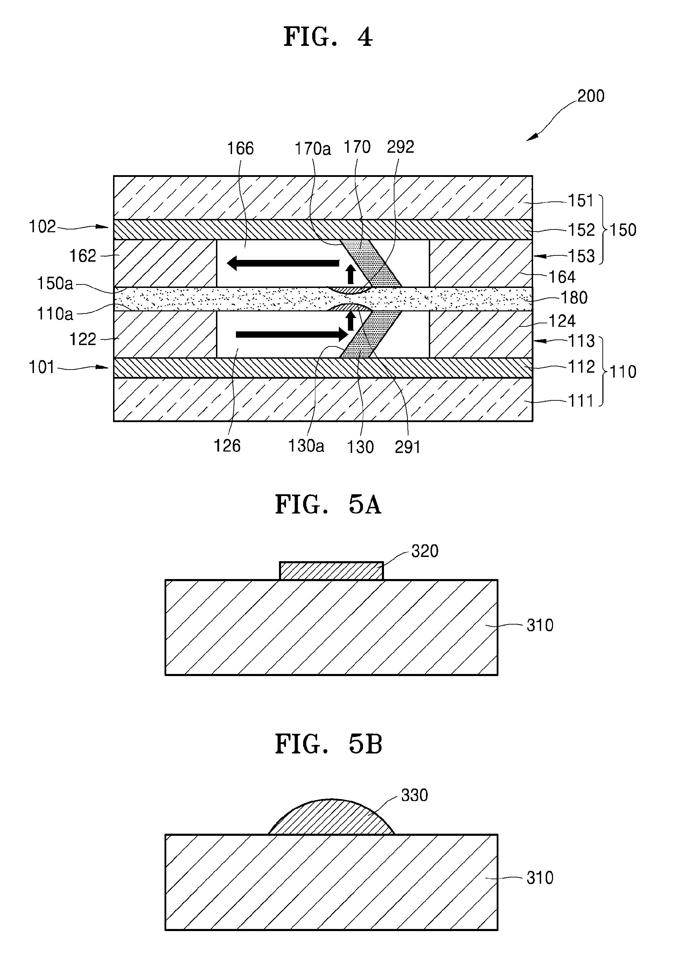

FIG. 4 is a cross-sectional view illustrating a multichip package 200 including optical interconnection, according to another example embodiment. Like reference numerals refer to like elements throughout the specification, and their detailed description will be omitted herein.

Referring to FIG. 4, a first convex lens 291 condensing light on an optical transmission region is formed on the second silicon layer 113 of the first optoelectronic chip 101. The first convex lens 291 provides efficient light transmission even when the first and second mirrors 130 and 170 are not accurately aligned. Additionally, when the total reflective surface 130a of the first mirror 130 is formed by etching the second silicon layer 113, its angle is about 54°, so that even when light spreads, the first convex lens 291 condenses the light and transmits it in an upward direction.

A second convex lens 292 condensing light on an optical transmission region is formed on the second silicon layer 153 of the second optoelectronic chip 102 in correspondence to the first convex lens 291. The second convex lens 292 is disposed below the second mirror 170 to receive light from the first mirror 130 and condense the received light, and then, transmits the condensed light to the second mirror 170.

The first convex lens 291 and the second convex lens 292 may be formed of a polymer or an oxide. The first convex lens 291 and the second convex lens 292 may have a hemispherical shape.

Although two convex lenses, namely, the first and second convex lenses 291 and 293, are shown in FIG. 4, the present disclosure is not limited thereto. For example, only one of the first and second convex lenses 291 and 293, may be installed.

The sealing layer 180 may be further formed between the first optoelectronic chip 101 and the second optoelectronic chip 102 with a thickness serving as an interval that prevents the first convex lens 291 and the second convex lens 292 from contacting each other. The sealing layer 180 may be formed of a material having a less refractive index than the first convex lens 291 and the second convex lens 292.

In one or more example embodiments, the convex lenses 291, 292 may compensate for any reduction in optical coupling efficiency due to the misalignment between the first stacked chip 101 and the second stacked chip 102.

FIGS. 5A and 5B are cross-sectional views illustrating a method of forming a convex lens of FIG. 4 according to an example embodiment.

Referring to FIG. 5A, a silicon substrate 310 is prepared. The silicon substrate 310 may correspond to a second silicon layer of an SOI substrate shown in FIGS. 1 and 4. A polymer pattern 320 is formed on a mirror region of the silicon substrate 310 to correspond to the reflective surfaces 130a and 170a of the first and second mirrors 130 and 170 shown in FIGS. 1 and 4.

Referring to FIG. 5B, the polymer pattern 320 is changed into a hemispherical shape pattern 330 through a reflow process of applying heat on the polymer pattern 320 is performed. The hemispherical shape pattern 330 may be used as the first and second convex lenses 291 and 292 of FIG. 4.

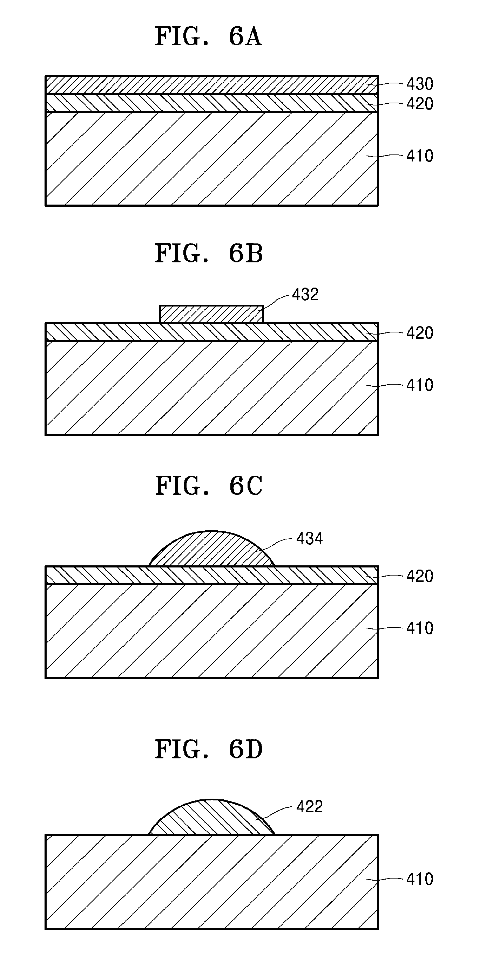

FIGS. 6A and 6D are cross-sectional views illustrating another method of forming a convex lens of FIG. 4, according to another example embodiment.

Referring to FIG. 6A, a silicon substrate 410 is prepared. The silicon substrate 410 may correspond to a second silicon layer of an SOI substrate shown in FIGS. 1 and 4.

A silicon oxide layer 420 and a polymer layer 430 are sequentially formed on the silicon substrate 410.

Referring to FIG. 6B, a polymer pattern 432 corresponding to a mirror region is formed by patterning the polymer layer 430.

Referring to FIG. 6C, the polymer pattern 432 may be changed into a hemispherical shape pattern 434 by performing a reflow process of applying heat on the polymer pattern 432.

Referring to FIG. 6D, a dry etching is performed on the hemispherical shape pattern 434. By dry etching the hemispherical shape pattern 434, a silicon oxide layer 422 having a hemispherical shape remains after the hemispherical shape pattern 434 is transferred to the silicon oxide layer 420. As a result, a hemispherical convex lens is formed from the silicon oxide layer 422.

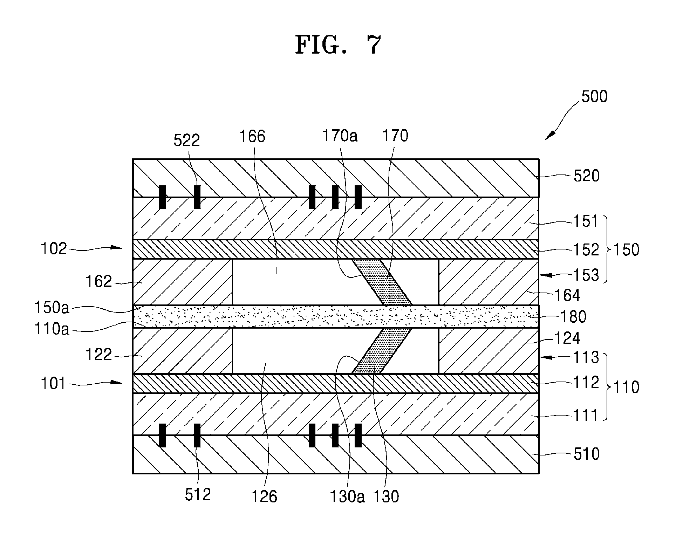

FIG. 7 is a cross-sectional view illustrating a multichip package including optical interconnection, according to an example embodiment. Like reference numerals refer to like elements throughout the specification, and their detailed description will be omitted herein.

Referring to FIG. 7, a multichip package 500 includes a first electronic circuit 510 disposed below the first optoelectronic chip 101. The first electronic circuit 510 may be a central processing unit (CPU), a memory, or a display chip. Additionally, the first driving circuit 124 may be included in the first electronic circuit 510. The first electronic circuit 510 may be electrically connected to a first optoelectronic chip 101 through a first via metal 512 that fills a via in the first silicon layer 111 and a via in the first electronic circuit 510. The first via metal 512 may be electrically connected to the first driving circuit 124 through a wire (not shown). Alternatively, the first electronic circuit 510 may be electrically connected to the first driving circuit 124 through a wire instead of the first via metal 512.

A second electronic circuit 520 is disposed on the second optoelectronic chip 102. The second electronic circuit 520 may be a CPU, a memory, or a display chip. Additionally, the second driving circuit 164 may be included in the second electronic circuit 520. The second electronic circuit 520 may be electrically connected to the second optoelectronic chip 102 through a second via metal 522 that fills a via in the first silicon layer 151 and a via in the second electronic circuit 520. The second via metal 522 may be electrically connected to the second driving circuit 164 through a wire (not shown). Alternatively, the second electronic circuit 520 may be electrically connected to the second driving circuit 164 through a wire instead of the second via metal 522.

The example embodiments are not limited to the structure of FIG. 7. For example, in the structure of FIG. 4, the first electronic circuit 510 may be disposed below the second optoelectronic chip 102, and the second electronic circuit 520 may be disposed on the first optoelectronic chip 101, and their detailed description is omitted.

According to example embodiments, since a signal is transmitted using optical interconnection, high-speed transmission is possible in comparison to signal transmission using a typical electrical wire.

Additionally, in one or more example embodiments, since the chips are vertically disposed and vertically disposed mirror are used rather than an optical fiber, optical coupling efficiency between optical waveguides may be improved.

It should be understood that the example embodiments described therein should be considered in a descriptive sense only and not for purposes of limitation. Descriptions of features or aspects within each embodiment should typically be considered as available for other similar features or aspects in other embodiments.

## Claims

1. A multichip package comprising:
a first optoelectronic chip including,
a first substrate;
a first optical device disposed on a first surface of the first substrate;
a first waveguide configured to transmit light from the first optical device in a direction parallel to the first surface; and
a first mirror having a reflective surface configured to reflect light from the first waveguide in an upward direction; and
a second optoelectronic chip stacked on the first optoelectronic chip, the second optoelectronic chip including,
a second substrate having a second surface facing the first surface;
a second mirror disposed on the second surface, the second mirror having a reflective surface disposed to face the reflective surface of the first mirror such that the second optoelectronic chip is optically interconnected to the first optoelectronic chip, the reflective surface of the second mirror configured to reflect light received from the first mirror in a direction parallel to the second surface,
a second waveguide configured to transmit the light reflected by the second mirror in a direction parallel to the second surface, and
a second optical device to which light from the second waveguide is incident.

2. The package of claim 1, wherein a line connecting the first mirror and the second mirror is substantially vertical to the first surface.

3. The package of claim 2, wherein each of the first substrate and the second substrate is a silicon on insulator (SOI) substrate that includes a silicon layer and a buried oxide layer,
the first optical device, the first waveguide, and the first mirror are formed in the silicon layer of the first substrate, and
the second optical device, the second waveguide, and the second mirror are formed in the silicon layer of the second substrate.

4. The package of any preceding claim, wherein the first mirror includes a material having a lower refractive index than that of the first substrate and an inclined total reflective surface with respect to the first surface, and
the second mirror includes a material having a lower refractive index than that of the second substrate and an inclined total reflection surface with respect to the second surface.

5. The package of claim 4, wherein the first mirror and the second mirror include silicon oxide.

6. The package of any preceding claim, wherein each of the first mirror and the second mirror has a thickness of 0.5 *µ*m to 5 *µ*m.

7. The package of any preceding claim, wherein the first mirror and the second mirror comprise:
a metallic layer.

8. The package of claim 7, wherein the metallic layer has a thickness of 100 nm to 1 *µ*m.

9. The package of any preceding claim, wherein the first optoelectronic chip further includes a first driving circuit configured to drive the first optical device, and
the second optoelectronic chip further includes a second driving circuit configured to drive the second optical device.

10. The package of claim 9, further comprising:
a first electronic circuit electrically connected to the first driving circuit, the first electronic circuit disposed on a second surface of the first substrate facing the first surface of the first substrate;
a second electronic circuit electrically connected to the second driving circuit on a first surface of the second substrate facing the second surface of the second substrate.

11. The package of any preceding claim, further comprising:
a lens on at least one of the first surface and the second surface at a position corresponding to a respective first one of the first mirror and the second mirror, the lens configured to condense incident light from the respective first one of the first mirror and the second mirror onto a second one of the first mirror and the second mirror.

12. The package of claim 11, wherein the lens has a hemispherical shape.

13. The package of claim 11 or 12, wherein the lens includes one of a polymer and an oxide.

14. The package of any preceding claim, further comprising:
a sealing layer filling a space between the first and second optoelectronic chips.

15. The package of any preceding claim, wherein the first optical device is a light-emitting device, and the second optical device is a light-receiving device.
